Europäisches Patentamt

European Patent Office

Office européen des brevets

(11) Veröffentlichungsnummer: **0 291 644 B1**

(12) **EUROPÄISCHE PATENTSCHRIFT**

(45) Veröffentlichungstag der Patentschrift: **03.06.92**

(21) Anmeldenummer: **88102905.2**

(22) Anmeldetag: **26.02.88**

(51) Int. Cl.⁵: **C04B 24/22**

Die Akte enthält technische Angaben, die nach dem Eingang der Anmeldung eingereicht wurden und die nicht in dieser Patentschrift enthalten sind.

(54) **Verflüssigungsmittel für mineralische Bindemittel.**

(30) Priorität: **22.05.87 DE 3717283**

(43) Veröffentlichungstag der Anmeldung:
**23.11.88 Patentblatt 88/47**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**EP-A- 0 090 434**

**DERWENT ACCESSION NR. 83-825 655, Ouestel Tele- systems (WPIL) DERWENT PUBLI-
CATIONS LTD., London**

(73) Patentinhaber: **RÜTGERSWERKE AKTIENGE-
SELLSCHAFT
Mainzer Landstrasse 217
W-6000 Frankfurt am Main 1(DE)**

(72) Erfinder: **Omran, Jafar, Dr.
Ahornstrasse 25
W-4620 Castrop-Rauxel(DE)**
Erfinder: **Swoboda, Siegfried
Aapstrasse 3
W-4620 Castrop-Rauxel(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Verflüssigungsmittel für mineralische Bindemittel auf Basis von wasserlöslichen Kondensationsprodukten von Naphthalin oder Alkylnaphthalinen mit Formaldehyd.

Mineralische Bindemittel, zu denen hydraulische Bindemittel wie Zement, hydraulischer Kalk, Gips oder Anhydrit oder nur an der Luft erhärtende Bindemittel wie Kalk gehören, werden vor ihrer Anwendung beim Bau allein oder in Abmischung mit Zuschlagstoffen mit Wasser in eine verarbeitbare, d. h. knetbare, streichfähige, pumpbare oder fließfähige Form gebracht.

Dabei ergibt sich im allgemeinen das Problem, daß zum Anteigen dieser Bindemittel und Zuschlagstoffe wesentlich mehr Anmachwasser notwendig ist, als bei der darauffolgenden chemischen Vernetzungsreaktion benötigt wird.

Die Folge ist, daß nach dem Abbinden das überschüssige Wasser verdunsten muß und der von ihm eingenommene Platz im Baukörper als Hohlraum zurückbleibt. Durch diese Hohlräume wird die mechanische Festigkeit des Baukörpers in starkem Masse beeinträchtigt. Dies ist besonders bei Betonbauten von großer technischer Bedeutung.

Man gibt daher dem Wasser/Bindemittel-Gemisch geringe Mengen eines Verflüssigungsmittels zu und erzielt damit eine Reduzierung des Wasseranteils bei gleichbleibender Fließfähigkeit ohne die Wassermenge erhöhen zu müssen, was z. B. bei Fließestrichen sehr wesentlich ist.

Als derartige Verflüssigungsmittel sind bislang folgende Zubereitungen beschrieben:
Wässrige Lösungen von Salzen der Lignin-Sulfonsöure, Mischungen aus Cellulose-äthern und Tensiden, in Wasser gelöste Melamin-Formaldehyd-Kondensationsprodukte, wässrige Emulsionen von Montanwachs, einem Alkyphenylpolyglykoläther und einem mit Äthylen- oder Propylenoxid umgesetzten Fettalkohol sowie wässrige Lösungen der Alkalisalze sulfonierter Styrol/Inden-Copolymerisationsprodukte oder sulfonierte Phenol-Formaldehyd-Kondensationsprodukte.

Besonders günstige Ergebnisse hinsichtlich der Verflüssigungswirkung, der Stabilität der Mischungen vor und während des Abbindevorgangs und der geringen Abhängigkeit des Abbindeverhaltens von der Doisierung der Verflüssigungsmittel zeigen solche auf Basis von wasserlöslichen Kondensationsprodukten von sulfoniertem Naphthalin oder Alkylnaphthalin mit Formaldehyd wie sie z. B. DE-AS 1 238 831, US-PS 4 447 266, C.A. 99:145045d (JP-A-5969459) bekannt sind.

Eigene Arbeiten mit diesem Verflüssigern auf Basis von Naphthalin- oder Alkylnaphthalin-Formaldehyd-Kondensationsprodukten zeigten jedoch, daß die ursprünglich gute Verflüssigungswirkung sehr schnell abnimmt.

Es ist daher die Aufgabe der Erfindung, verbesserte, billige Verflüssigungsmittel für mineralische Bindemittel bereitzustellen, die zwar die gleichen guten Eigenschaften zeigen wie die bekannten Naphthalin- oder Alkylnaphthalin-Formaldehyd-Kondensationsprodukte, die aber den Verflüssigungseffekt über einen längeren Zeitraum bewirken.

Es ist eine weiter Aufgabe, daß mit diesen bereitgestellten Verflüssigungsmitteln hergestellter Beton eine höhere Festigkeit zeigt, als bei Einsatz der bekannten sulfonierten Naphthalin- oder Alkylnaphthalin-Formaldehyd-Kondensationsprodukten.

Die Lösung der Aufgabe erfolgt durch die Verflüssigungsmittel gemäß der Ansprüche 1 bis 3 und ein Verfahren zu ihrer Herstellung gemäß Anspruch 4.

Es wurde gefunden, daß die gewünschten Verbesserungen in einfacher Weise erreicht werden, wenn bei der Kondensation von sulfoniertem Naphthalin- oder Alkylnaphthalin mit Formaldehyd geringe Mengen Carbazol mit cokondensiert werden. So ist im Vergleich zu reinen, wasserlöslichen, sulfonierten Naphthalin- oder Alkylnaphthalin-Fromaldehyd-Kondensationsprodukten, wie sie in DE-AS 1 238 831 oder C.A. 101:156567e beschrieben sind, der Verflüssigungseffekt verbessert. Ein besonderer Vorteil aber ist die zeitabhängige Beeinflussung des Erstarrungsverhaltens der Mörtelmischung, die bei dem erfindungsgemäßen Verflüssigungsmittel wesentlich günstiger ist. Die Erstarrung beginnt langsam, zeigt dann aber keinen unerwünschten Verzögerungseffekt. Dieses Verhalten ist von entscheidendem Vorteil bei der praktischen Verwendung als Verflüssiger. Darüber hinaus sind sowohl Druck- wie auch Biegezugfestigkeit verbessert.

Ausgangsprodukte für die erfindungsgemäßen Verflüssigungsmittel sind Naphthalin oder Alkylnaphthaline, insbesondere Methylnaphthaline. Diese Produkte können rein oder aber auch im beliebigen Gemisch miteinander eingesetzt werden.

Als Carbazol kann entweder reines Carbazol mit einem Gehalt von 97 bis 100 % oder wohlfeiles, technisches Carbazol, sogenannte Carbazolfraktion mit einem Gehalt von 60 bis 95 % verwendet werden. Die Menge an eingesetztem Carbazol liegt im Bereich von 0,05 bis 0,2 Mol pro Mol des eingesetzten Naphthalins oder Alkylnaphthalins. Naphthalin oder Alkylnaphthaline und Carbazol werden zuerst gemeinsam nach einem an sich bekannten Verfahren sulfoniert. Diese Sulfonierung erfolgt mit Schwefelsäure bzw.

2

EP 0 291 644 B1

mit Substanzen, welche wie Schwefelsäure selbst in der Lage sind, eine Substitution durch Sulfonatgruppen hervorzurufen, wie z. B. Schwefeltrioxid, Oleum oder Chlorsulfonsäure.

Die erhaltenen sulfonsauren Produkte werden mit Formaldehyd oder einer Substanz, die unter den Reaktionsbedingungen Formaldehyd abzuspalten vermag, umgesetzt. Produkte dieser Art sind z. B. Formaldehyd selbst bzw. dessen handelsübliche 30- bis 50 %ige wäßrige Lösung (Formalin) oder Substanzen, die Formaldehyd in chemisch lockerer Form gebunden enthalten, wie Formaldehydbisulfit, Urotropin, Trioxymethylen oder Paraformaldehyd.

Die Mengen an eingesetzten Formaldehyd liegen im Bereich von 0,8 bis 1,2 Mol pro Mol der sulfonsauren Produkte. Nach der Kondensationsreaktion wird mit Alkali- oder Erdalkalilauge neutralisiert, wobei pH-Werte von ca. 6,5 bis 8,5 eingestellt werden. Man erhält als Reaktionsprodukte wäßrige Zubereitungen mit einem Feststoffgehalt von 20 bis 40 Gew.%. Diese Zubereitungen werden meist unverändert als Verflüssigungsmittel entweder dem zu verwendenden Anmachwasser oder dem Bindemittel bzw. einem bereits angeteigten Gemisch aus Bindemittel und Zuschlagstoffen beigefügt und intensiv vermischt.

Die folgenden Beispiele zeigen die Herstellung der erfindungsgemäßen Verflüssigungsmittel und ihre Anwendung.

Beispiel 1

In einem Dreihalsrundkolben, versehen mit Rührer, Tropftrichter, Thermometer und Kühler, werden 133 g $\beta$-Methylnaphthalin-Fraktion (enthält ca. 70 % $\beta$-Methylnaphthalin, 21 % $\alpha$-Methylnaphthalin, 3 % Naphthalin und 2 % Indol) und 8,35 g Carbazol-Fraktion (ca. 80 % Carbazol) bei 120 °C innerhalb von 1 h mit 128 g 96 %iger Schwefelsäure sulfoniert. Dann wird auf 160 °C erhitzt und 3 h lang bei dieser Temperatur gerührt. Nach dem Abkühlen auf 120 °C werden 100 g $H_2O$ und danach 51 g 96 %ige Schwefelsäure rasch zugegeben. Es wird auf 80 °C abgekühlt und innerhalb von 3 h werden 81 g 37 %iges Formalin zugetropft. Danach wird auf 95 °C erwärmt, 16 h lang bei dieser Temperatur gerührt, 100 g $H_2O$ zugegeben, weitere 8 h bei 95 °C gerührt, noch 403 g $H_2O$ zugegeben und mit 337 g 30 %iger Natronlauge bis zu einem pH-Wert von 8,5 neutralisiert.

Das entstandene Produkt ist eine 30 %ige Lösung des Na-Salzes eines Methylnaphthalin/Carbazol-Sulfonsäure-Kondensationsproduktes mit höherem Kondensationsgrad.

Beispiel 2

Analog zu Beispiel 1 wird eine Methylnaphthalin-Fraktion (ohne Zugabe von Carbazol) sulfoniert und mit Formaldehyd kondensiert

Beispiel 3

Die Prüfung als Verflüssigungsmittel für Zement erfolgt durch Untersuchungen damit hergestellter Mörtel und des ausgehärteten Betons gemäß den DIN-Vorschriften

DIN 18555, Abschnitt 9 -     Ausbreitmaß
DIN 1164 , Teil 7 -     Festigkeit
DIN 1164 , Teil 5 -     Erstarrungsprüfung

Dazu werden zwei verschiedene Versuchsgemische herangezogen, die sich lediglich im eingesetzten Verflüssigungsmittel unterscheiden:

450 g     Hochofenzement HOZ 35L
1350 g     Normalsand nach DIN 1164
     Wasser, entsprechend den angegebenen Wasser/Zement-Faktoren
4,5 g     Verflüssigungsmittel aus Beispiel 1 bzw. aus Beispiel 2
Parallel werden die Versuche als O-Versuche ohne Verflüssigungsmittel durchgeführt.

Die ermittelten Werte sind in der nachfolgenden Aufstellung angegeben:

|  | Gemisch 1 (Verflüssiger aus B1) | Gemisch 2 (Verflüssiger aus B2) | 0-Versuch |
|---|---|---|---|
| Wasser/Zement-Faktor | 0,44 | 0,45 | 0,5 |
| Druckfestigkeit $(N/mm^2)$ | | | |
| nach 2 d | 15 | 13 | 13 |
| 7 d | 35 | 28 | 25 |
| 28 d | 46 | 44 | 44 |
| Biegezugfestigkeit $(N/mm^2)$ | | | |
| nach 2 d | 3,02 | 2,90 | 2,73 |
| 7 d | 5,10 | 4,82 | 4,72 |
| 28 d | 6,04 | 5,95 | 5,99 |
| Ausbreitmaß (cm) | 14,5 | 14,4 | 14,5 |
| $H_2O$-Einsparung (%) | 12 | 10 | - |
| Erstarrungsbeginn | 3 h 20 min. | 3 h 45 min. | 2 h 40 min. |
| Erstarrungsende | 3 h 45 min. | 4 h 25 min. | 3 h |

EP 0 291 644 B1

Darüber hinaus wird die Verflüssigungswirkung der Verflüssiger aus den Beispielen 1 und 2 in Abhängigkeit
zum Alter der Mörtelmischung untersucht. Dabei ergibt
sich folgendes Bild:

| | Verflüssiger | |
| | aus Beispiel 1 | aus Beispiel 2 |
| Verbesserung sofort | 33 % | 27 % |
| Verbesserung nach 30 Min | 18 % | 7 % |
| Verbesserung nach 60 Min | 8 % | etwa Null |

**Patentansprüche**

1.  Verflüssigungsmittel für mineralische Bindemittel auf Basis von wasserlöslichen Kondensationsprodukten von sulfoniertem Naphthalin oder Alkylnaphthalin mit Formaldehyd, dadurch **gekennzeichnet,** daß die Kondensationsprodukte cokondensiertes sulfoniertes Carbazol enthalten.

2.  Verflüssigungsmittel nach Anspruch 1, **dadurch gekennzeichnet,** das es Kondensationsprodukte auf der Basis von Methylnaphthalingemischen sind.

3.  Verflüssigungsmittel nach den Ansprüchen 1 und 2, **dadurch gekennzeichnet,** das der Carbazolanteil 0,05 bis 0,2 Mol pro Mol des eingesetzten Naphthalins oder Alkylnaphthalins beträgt.

4.  Verfahren zur Herstellung von Verflüssigungsmitteln nach den Ansprüchen 1 bis 3, **dadurch gekennzeichnet,** daß Naphthalin oder Alkylnaphthalin mit Carbazol vermischt und sulfoniert werden und die sulfonierten Produkte in saurem Medium mit Formaldehyd kondensiert und danach mit einer Alkali- oder Erdalkalilauge neutralisiert werden.

**Claims**

1.  Liquefying agents for mineral binders, based on water-soluble condensation products of sulphonated naphthalene or alkyl naphthalene with formaldehyde, characterized in that the condensation products contain co-condensed sulphonated carbazole.

2.  Liquefying agents according to Claim 1, characterized in that there are condensation products based on methyl naphthalene mixtures.

3.  Liquefying agents according to Claims 1 and 2, characterized in that the carbazole proportion amounts to from 0.05 to 0.2 mole per mole of the naphthalene or alkyl naphthalene used.

4.  A process for preparing liquefying agents according to Claims 1 to 3, characterized in that naphthalene or alkyl naphthalene is mixed with carbazole and sulphonated, and the sulphonated products are condensed in an acid medium with formaldehyde and are then neutralized with an alkali or alkaline-earth lye.

**Revendications**

1. Agents fluidifiants pour liants minéraux à base de produits de condensation de naphtalène ou d'alkylnaphtalène sulfoné avec du formaldéhyde, hydrosolubles, caractérisés en ce que les produits de condensation contiennent du carbazole sulfoné co-condensé.

2. Agents fluidifiants selon la revendication 1, caractérisés en ce que ce sont des produits de condensation à base de mélanges de méthylnaphtalènes.

3. Agents fluidifiants selon les revendications 1 et 2, caractérisés en ce que la fraction de carbazole s'élève à 0,05-0,2 mole par mole de naphtalène ou d'alkylnaphtalène mis en oeuvre.

4. Procédé de préparation d'agents fluidifiants selon les revendications 1 à 3, caractérisé en ce que du naphtalène ou un alkylnaphtalène est mélangé avec du carbazole et sulfoné et que les produits sulfonés sont condensés avec du formaldéhyde en milieu acide et ensuite neutralisés avec une lessive alcaline ou alcalino-terreuse.